# EUROPEAN PATENT APPLICATION

(11) **EP 2 088 713 A1**
(43) Date of publication of application: **12.08.2009**
(21) Application number: 08715106.4
(22) Date of filing: 28.02.2008
(51) Int. Cl.: H04L 12/26

(54) **A POLLING METHOD AND A POLLING SERVER**

(30) Priority: 30.04.2007 CN 200710107146
(71) Applicant: Huawei Technologies Co., Ltd., Longgang District, Shenzhen Guangdong 518129 (CN)
(72) Inventor: CHEN, Gang, Shenzhen, Guangdong 518129 (CN); LI, Xiuchuan, Shenzhen, Guangdong 518129 (CN); ZHANG, Xuan, Shenzhen, Guangdong 518129 (CN); WEI, Li, Shenzhen, Guangdong 518129 (CN); KONG, Jiankun, Shenzhen, Guangdong 518129 (CN); YU, Xubo, Shenzhen, Guangdong 518129 (CN); LIU, Wenjie, Shenzhen, Guangdong 518129 (CN)
(74) Representative: Pfenning, Meinig & Partner GbR
(86) International application number: PCT/CN2008/070370
(87) International publication number: WO 2008/131661

(57) **Abstract**

A patrol method includes: generating a patrol template according to at least one patrol item in at least one patrol package selected by the user, where the patrol template records at least one patrol item selected by the user; resolving at least one patrol item recorded in the patrol template; and sending the patrol command included in at least patrol item. A patrol server includes: a patrol template generating unit, adapted to record at least one patrol item selected by the user; a patrol template resolving unit, adapted to resolve the patrol item in the patrol template; and a patrol command sending unit, adapted to send the patrol command as a result of resolving the patrol item to the device to be detected. The present invention enables concurrent patrol for different objects, thus improving the patrol efficiency and user experience and facilitating the user operation.

## Description

This application claims a priority from the Chinese Patent Application No. 200710107146.6, filed with the Chinese Patent Office on April 30, 2007 and entitled "Patrol Method and Patrol Server", the contents of which are incorporated herein by reference in their entirety.

### FIELD OF THE INVENTION

The present invention relates to the field of networks and communication technologies, and in particular, to a patrol method and patrol server.

### BACKGROUND

Patrol is a process of detecting the software automatically through a series of query operations and comparison operations, and outputting the detection result. The contents of patrol include: configuration inspection (e.g. inspecting environment variables and parameter configuration), resource consumption inspection (e.g. inspecting memory, CPU, disk space, and tape space), system state inspection (e.g. inspecting all files of the system, dual-system state, process state, and database connection), logs and exception analysis, and service operation inspection. The patrol server is remotely or locally connected to the device to be detected, and patrols the device to be detected in a specific way.

The conventional art provides two patrol modes:
a command line-based patrol mode, where the command line is input manually and is executed on the device to be detected; and
an automatic patrol mode, where the patrol command is written into a batch processing file and the batch processing file is executed on the device to be detected.

In the process of researching the present invention, the inventor finds at least the following defects in the conventional art:
In the command line-based patrol mode, a patrol is performed by inputting multiple commands, which leads to low efficiency of patrol and consumes too much time and effort. In the automatic patrol mode, the patrol commands specific to the same type of objects or specific to multiple objects are written into a batch processing file. Once the patrol command is written into the batch processing file, the patrol command is hardly modifiable in the execution process, which brings inconvenience to the patrol operation of the user. Moreover, all the batch processing files need to be compiled by the user, and the user has to compile a new batch processing file for every new patrol, which consumes too much time and effort.

### SUMMARY

The embodiments of the present invention provide a patrol method and patrol server to patrol different objects concurrently.

A patrol method provided in an embodiment of the present invention includes:
generating a patrol template according to at least one patrol item in at least one patrol package selected by the user, where the patrol template records at least one patrol item selected by the user;
resolving the patrol item recorded in the patrol template to obtain a patrol command; and
sending the patrol command to a device to be detected.

A patrol server provided in another embodiment of the present invention includes:
a patrol template generating unit, adapted to generate a patrol template according to at least one patrol item in at least one patrol package selected by the user, where the patrol template records at least one patrol item selected by the user;
a patrol template resolving unit, adapted to resolve the patrol item in the patrol template, and obtain a patrol command; and
a patrol command sending unit, adapted to send the patrol command to the device to be detected.

The foregoing technical solution reveals that in an embodiment of the present invention, a patrol template is generated according to the patrol item selected by the user, the patrol item recorded in the patrol template is resolved, and the patrol command carried in the patrol item is sendsended to the device to be detected. In this process, the patrol item in the patrol template may come from the patrol package specific corresponding to different objects, and the sended patrol commands include patrol commands specific corresponding to different objects. The patrol commands which are selected by the user and specific corresponding to different patrol objects may be sended to the devices to be detected at a time, thus improving the user experience and patrol efficiency. The patrol items selected by the user are used to generate a patrol template, and the patrol template facilitates the user to add and delete the patrol items, and facilitates the patrol operations of the user.

### BRIEF DESCRIPTION OF THE DRAWINGS

Figure 1 is a flowchart of a patrol method provided in an embodiment of the present invention;

Figure 2 shows a method of outputting the patrol result in another embodiment of the present invention; and

Figure 3 shows a structure of a patrol server provided in another embodiment of the present invention.

### DETAILED DESCRIPTION

A patrol method and a patrol system are provided in embodiments of the present invention to patrol different objects concurrently, thus improving patrol efficiency and facilitating the user operation.

The present invention is detailed below by reference to embodiments.

Before the patrol begins, various types of patrol packages are stored on the patrol server. A patrol package is a collection of patrol items for a same type of patrol. The type of patrol is categorized according to the specific requirement. For example, the patrols for the Short Message Service (SMS) constitute a type of patrol, and therefore, patrol commands for patrolling the SMS host, SMS database, specific services of SMS may be incorporated into a patrol package. Each patrol package implements a type of approximate patrol functions, each patrol function corresponds to a patrol item, and each patrol item corresponds to a specific patrol command and implements a specific patrol function. The patrol command in each patrol item may be the command existent in the system of the device to be detected. In this case, the patrol item carries no executable program of the patrol command. If the patrol command in the patrol item is not the command existent in the operating system, the patrol item needs to carry the executable program of the patrol command. The patrol function of a patrol package is implemented by multiple patrol items jointly.

A patrol package includes the description information about the patrol package, as shown in Table 1:

**Table 1**

| *Information item* | *Description* |
|---|---|
| Name | *Name of the patrol package* |
| Version | *Version of the patrol package* |
| Product Name | *Product type to which the patrol package is applicable* |
| Description | *Description on the patrol package* |
| Release Date | *Release date* |
| Author | *Person in charge of the patrol package* |
| RespStyle File | *Descriptive file name corresponding to the output result of the patrol package* |
| Count | *Total quantity of patrol items of the patrol package* |
| Item List | *List of patrol items* |

The information items of "Name", "Version", "Description" and "Item List" in the above table are displayed to the user through an operation interface (such as web). After activating the operation interface, the user sees the patrol items of various types of patrol packages, and may select patrol items in different types of patrol packages via the operation interface to perform patrol. After the user opens the operation interface, selects and submits the patrol items, the patrol server starts the patrol process.

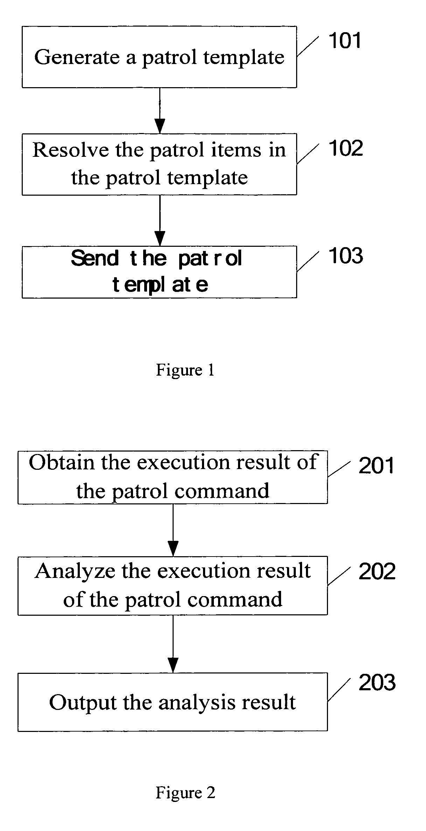

As shown in Figure 1, the process of the patrol method provided in an embodiment of the present invention includes the following step.

Step 101: A patrol template is generated.

The user selects the patrol items in the patrol package, and the patrol server generates a patrol template according to the patrol items selected by the user. The generated patrol template is used for recording the patrol items selected by the user. The patrol template may include the patrol items selected by the user, or include identifiers of the patrol items.

The patrol item(s) selected by the user may be multiple patrol items in multiple patrol packages, or multiple patrol items in a single patrol package, or a single patrol item in a single patrol package. The patrol packages from which the patrol items are selected are not limited to only one patrol package. Therefore, the generated patrol template may include patrol items from different types of patrol packages; one patrol template may include patrol items of the patrol host, or patrol items of the patrol database, or patrol items of patrol services.

It should be noted that after the patrol server generates the patrol template according to the patrol items selected by the user and before the patrol items are executed on the device to be detected, if the user selects a new patrol item, the patrol server records the newly selected patrol item into an existing patrol template upon receiving the command of adding the new patrol item selected by the user. In this case, if the user chooses to delete one or more patrol items in the existing patrol template, the patrol server deletes the patrol item(s) selected by the user and recorded in the existing patrol template upon receiving the command of deleting the patrol item(s).

In the patrol process, the patrol server may save the patrol template generated in the patrol. In the next patrol, the user may select the saved patrol template for patrolling, without selecting the patrol items again. This facilitates the user operation and reduces the workload of the server. Moreover, in this embodiment, a patrol template is generated according to the patrol items selected by the user, and various types of patrol items selected by the user are gathered together. Therefore, the devices to be detected can be patrolled concurrently in light of the patrol items corresponding to different objects; and the patrol items recorded in the patrol template may be added or deleted before being sent to the devices to be detected, thus facilitating the user operation and improving the patrol efficiency.

Step 102: The patrol items in the patrol template is resolved.

The patrol server resolves the patrol items recorded in the generated patrol template. The contents to be resolved include:
quantity of patrol items recorded in the patrol template;
patrol packages from which the patrol items come;
executable programs corresponding to the patrol command in the patrol item; and
whether parameters are carried in the patrol item or not.

The contents that need to be specified are:
whether to carry the executable programs and parameters when resolving the patrol item, obtaining the patrol command to be sended, and determining to send the patrol command in the patrol item;

When the device system to be detected contains the executable program of the patrol command in the patrol item, the sended patrol command carries no executable program; When the device system to be detected does not contain the executable program of the patrol command in the patrol item, the sended patrol command carries the executable program of the patrol command. If the patrol item carries parameters, the patrol command carries the parameters when being sended; If the patrol item does not carry parameters, the patrol command carries no parameter when being sended.

The information in the patrol item is shown in Table 2:

**Table 2**

| Information | Description |
|---|---|
| item | |
| ID | Identifier of the patrol item |
| Name | Name of the patrol item |
| Dev Types | Patrol type of the patrol item, for example, specifying the type of the service or host |
| Description | Description information about the patrol item |
| Command | The corresponding patrol command, namely, a command in the operating system, or a patrol command or executable program in the patrol package |
| Parameter | Option parameter of the patrol command |
| isParamNeed | Specifying whether the patrol command requires parameters |
| Time Out | Timeout duration, namely, threshold duration of |
| | executing the command, beyond which the patrol command is terminated automatically |

In the above table, the "Parameter" means that: If any parameter exists, the parameter is sent to the patrol command during execution; If any parameter does not exist, no parameter is sent. For example, the function of the "netstat" command is to display the information of network connection, routing table, and network interface. If the user expects that the device to be detected displays the TCP connection state, the format of the command carrying the parameter is "netstat -t", and the parameter is also sended at the time of sending the patrol item corresponding to the command after the parameter carried in the command is resolved.

"Time Out" specifies the threshold duration of executing the patrol command in the device to be detected. If the execution of the patrol command in the device to be detected is not finished within the specified threshold duration, the timeout of the execution occurs and the execution of the patrol command is terminated.

After the patrol item is resolved, step 103 is executed to send the patrol command.

Step 103: The patrol command is sended.

The patrol command corresponding to the patrol item selected by the user in the patrol template is sended. As described in step 102, if the patrol command is a system command on the device to be detected and the executable program of the patrol command exists on the device to be detected, only the patrol command is sended; if the patrol command is not a system command on the device to be detected and no executable program of the patrol command exists on the device to be detected, the executable program of the patrol command needs to be sended at the time of sending the patrol command.

After the patrol server sends the patrol command to the destination device to be detected, the patrol command is executed on the device to be detected. Finally, after the patrol command is executed on the device to be detected, the execution result of the patrol command is output. After obtaining the result of executing the patrol command on the device to be detected, the patrol server analyzes the execution result, and outputs a directly viewable patrol result to the user. The following embodiment specifies the process of the patrol server analyzing the execution result and outputting the patrol result.

Figure 2 shows a method of outputting the patrol result in this embodiment.

Step 201: The execution result of the patrol command is obtained.

After the device to be detected receives the patrol command from the patrol server, the patrol server logs in to the device to be detected, and the patrol command is executed on the device to be detected. After the patrol command is executed on the device to be detected, the patrol server obtains the execution result of the patrol command, and performs step 202.

Step 202: The execution result of the patrol command is analyzed.

The analysis on the patrol command comes in two circumstances:
(i) The execution result of the patrol command is compared with the preset value. If the execution result falls within the preset value range, the comparison result is "pass". If the execution result goes beyond the preset value range, the comparison result is "failure". For example, a returned value of a patrol item is required to fall within 30-50 (for example, CPU occupancy). If the returned value falls within 30-50, the comparison result indicates that this item meets the requirement; If the returned value does not fall within 30-50" the comparison result indicates that this item does not meet the requirement.
(ii) The execution result of the patrol command is queried first, and specific parameters in the execution result are obtained. The parameters are compared with the preset rules. For example, if there are many execution results, the execution results are viewed, and a line of field is extracted from the execution results to obtain the required parameters. Specifically, an inspection is performed to check whether the state of the network adapter is connected or disconnected. The obtained parameter about the connected or disconnected state is compared with the preset rules. If the network adapter is disconnected, an inspection is performed to check whether the network adapter is configured. If the network adapter is configured, it is irrational, and the comparison result is "irrational". If the network adapter is connected, it is rational if the network adapter is configured, and the comparison result is "rational".

Step 203: The analysis result is output.

The analysis result output in this step is "compliant" or "incompliant", "pass" or "failure", "rational" or "irrational", or other directly viewable result.

The process from the user selecting a patrol item and starting patrol to outputting a patrol result is finished. After the patrol result is output, the user understands the state of detection items of the device to be detected. The user performs analysis and alert for possible opinions and problems, and take maintenance measures accordingly, with a view to better operation of the patrolled device.

In this embodiment, an execution result is analyzed, and a directly viewable patrol result is output, namely, "pass" or "failure", "compliant" or "incompliant", "rational" or "irrational". Therefore, the user obtains the directly viewable result, without the need of comparing the execution result with the rules, thus reducing the workload of the user.

Detailed above is the process illustrated in Figure 1 and Figure 2. The following embodiment is about the apparatus of implementing the foregoing method.

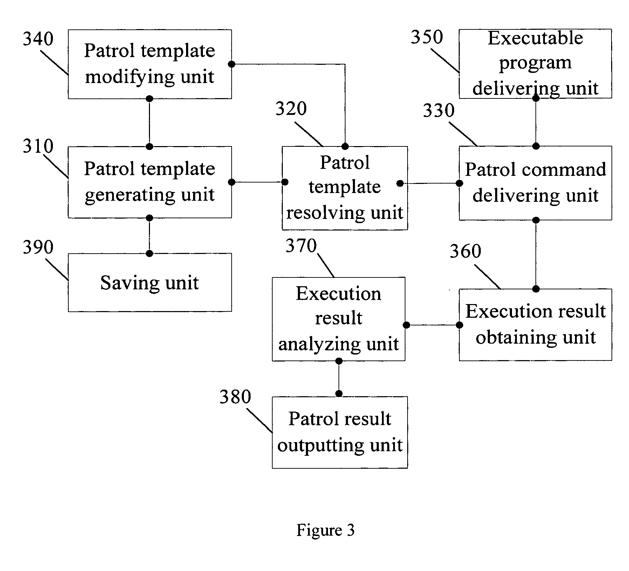

Figure 3 shows a structure of a patrol server provided in an embodiment of the present invention.

As shown in Figure 3, a patrol server provided in the present invention includes:
a patrol template generating unit 310, adapted to generate a patrol template according to at least one patrol item in at least one patrol package selected by the user, where the patrol template records at least one patrol item selected by the user;
a patrol template resolving unit 320, adapted to resolve at least one patrol item in the patrol template; and
a patrol command sending unit 330, adapted to send patrol command carried in at least one patrol item.

After the patrol template generating unit 310 generates the patrol template and before the patrol template resolving unit 320 resolves at least one patrol item in the patrol template, if the user chooses to add at least one patrol item in at least one patrol package; or after the patrol template generating unit 310 generates the patrol template and before the patrol template resolving unit 320 resolves at least one patrol item in the patrol template, if the user chooses to delete at least one patrol item in the patrol template, the patrol server further includes:
a patrol template modifying unit 340, adapted to add at least one patrol item in at least one patrol package selected by the user into the patrol template, and delete at least one patrol item selected by the user.

If the patrol command sended by the patrol command sending unit 330 is not a system command existent on the device to be detected, the patrol server needs to send executable program of the patrol command at the same time of sending the patrol command. In the corresponding apparatus structure, the patrol server further includes:
an execution program sending unit 350, adapted to send the executable program of the patrol command.

After the patrol command is executed, the patrol server displays the patrol result. The patrol server further includes:
an execution result obtaining unit 360, adapted to obtain execution result of the patrol command;
an execution result analyzing unit 370, adapted to analyze the execution result, and obtain an analysis result; and
a patrol result outputting unit 380, adapted to output the analysis result.

Moreover, if the generated patrol template is saved in an embodiment of the present invention, the patrol server further includes:
a saving unit 390, adapted to save the patrol template.

It should be noted that after the user selects a patrol item, the patrol server patrols the device to be detected. This patrol system includes a patrol server and a device to be detected.

Another solution provided in another embodiment of the present invention is:
A patrol agent is added between the patrol server and the device to be detected. The patrol agent receives the patrol item sended by the patrol server, analyzes the patrol item as described in step 102 in the patrol method embodiment, and sends the patrol command (or together with the executable program of the patrol command) to the device to be detected. The patrol agent further executes the executable program of the patrol command on the device to be detected, retrieves the execution result of the patrol command, and returns the execution result to the patrol server. The patrol agent further still provides a dedicated channel between the patrol server and the device to be detected. Therefore, the patrol item sended by the patrol server arrives at the device to be detected quickly, thus improving the patrol efficiency. The patrol agent may exist on a physical device independently or on the device to be detected.

It is understandable to those skilled in the art that all or part of the steps in the foregoing embodiments may be implemented through hardware instructed by programs. The programs may be stored in a storage medium readable by a computer (namely, a personal computer, server, network device, and so on), for example, ROM/RAM, magnetic disk, and CD.

Detailed above are a patrol method and a patrol system under the present invention. Although the invention is described through some exemplary embodiments, the invention is not limited to such embodiments. It is apparent that those skilled in the art can make various modifications and variations to the invention without departing from the spirit and scope of the invention. The invention shall cover the modifications and variations provided that they fall in the scope of protection defined by the following claims or their equivalents.

## Claims

1. A patrol method, comprising:
generating a patrol template according to at least one patrol item in at least one patrol package selected by a user, wherein the patrol template records at least one patrol item selected by the user;
resolving the patrol item recorded in the patrol template to obtain a patrol command; and
sending the patrol command to a device to be detected.

2. The method of claim 1, wherein after the patrol template is generated, the method further comprises:
receiving a command of adding a patrol item indicated by the user, and recording the patrol item indicated by the user into the patrol template.

3. The patrol method of claim 1, wherein after the patrol template is generated and before at least one patrol item in the patrol template is resolved, the method further comprises:
receiving a command of deleting a patrol item indicated by the user, and deleting the patrol item recorded in the patrol template as indicated by the user.

4. The patrol method of claim 2 or claim 3, further comprising:
sending the patrol command and executable program of the patrol command to the device to be detected.

5. The patrol method of claim 4, further comprising:
obtaining an execution result of the patrol command after the patrol command is executed on the device to be detected;
analyzing the execution result of the patrol command, and
outputting an analysis result.

6. The patrol method of claim 1 or claim 5, further comprising:
saving the patrol template generated during the patrol.

7. A patrol server, comprising:
a patrol template generating unit, adapted to generate a patrol template according to at least one patrol item in at least one patrol package selected by a user, wherein the patrol template records at least one patrol item selected by the user;
a patrol template resolving unit, adapted to resolve the patrol item in the patrol template, and obtain a patrol command; and
a patrol command sending unit, adapted to send the patrol command to a device to be detected.

8. The patrol server of claim 7, further comprising:
a patrol template modifying unit, adapted to add the patrol item selected by the user into the patrol template, and delete the patrol item indicated by the user from the patrol template.

9. The patrol server of claim 7 or claim 8, further comprising:
an executable program sending unit, adapted to send an executable program of the patrol command.

10. The patrol server of claim 7, claim 8, or claim 9, further comprising:
an execution result obtaining unit, adapted to obtain an execution result of the patrol command;
an execution result analyzing unit, adapted to analyze the execution result, and work out an analysis result; and
a patrol result outputting unit, adapted to output the analysis result.

11. The patrol server of claim 10, further comprising:
a saving unit, adapted to save the patrol template.
